# EUROPÄISCHE PATENTSCHRIFT

(11) **EP 0 505 910 B1**
(45) Veröffentlichungstag und Bekanntmachung des Hinweises auf die Patenterteilung: **10.01.1996**
(21) Anmeldenummer: 92104663.7
(22) Anmeldetag: 18.03.1992
(51) Int. Cl.: B29D 30/56

(54) **Verfahren zum Runderneuern von Grossreifen**
Method for retreading large tyres
Procédé pour le rechapage de grands pneumatiques

(30) Priorität: 27.03.1991 DE 4109984
(43) Veröffentlichungstag der Anmeldung: 30.09.1992
(73) Patentinhaber: Reifen-Ihle GmbH, D-89312 Günzburg (DE)
(72) Erfinder: Ihle, Johann, W-8870 Günzburg (DE)
(74) Vertreter: Munk, Ludwig, Dipl.-Ing.

(56) Entgegenhaltungen:
- DE-A- 1 780 440
- DE-A- 2 503 973
- GB-A- 1 510 186
- US-A- 3 698 975
- Prospekt VAKUUM VULK 1/73

## Beschreibung

Die Erfindung betrifft ein Verfahren zum Runderneuern von Großreifen wie EM-Reifen, bei dem auf die vorbereitete Karkasse eines Reifens unter Zwischenschaltung wenigstens einer Haftgummischicht ein neuer, in einer beheizbaren Form abschnittsweise gepreßter Laufbelag aufgelegt und dann der gesamte Reifen in einem Autoklaven einer Vulkanisationsbehandlung unterzogen wird.

Ein Verfahren dieser Gattung ist aus dem Prospekt "Vakuum Vulk" 1/73 bekannt. Bei diesem Verfahren werden die Laufstreifen für EM-Reifen in Segmentform hergestellt und die einzelnen Segmente werden nacheinander auf die Karkasse gelegt. Infolge der Verwendung von Einzel-Segmenten ergeben sich zwischen jeweils zwei Segmenten Schwachstellen, die auch durch eine Vulkanisationsbehandlung nicht völlig beseitigt werden können. Überdies ist das Herstellen und Auftragen einzelner Segmente kostenintensiv und aufwendig.

Ein Verfahren zum Runderneuern von Großreifen ist auch aus der DE 30 03 268 C1 bekannt. Bei diesem Verfahren wird der Laufbelag in Form mehrerer Segmente hergestellt, die quer zur Umfangsrichtung etwa entsprechend der diesbezüglichen Krümmung der Karkasse gebogen sind. Die einzelnen Segmente werden hintereinander auf die Karkasse aufgelegt, die im Schulterbereich nicht aufgebaut ist, so daß sich quer zur Umfangsrichtung eine vergleichsweise starke Krümmung ergibt. Um Krümmungsunterschiede ausgleichen zu können, müssen die einzelnen Segmente in sich sehr beweglich sein. Um diese Beweglichkeit zu erhalten, werden die Segmente beim Pressen nicht ausvulkanisiert, sondern sollen in ihrem inneren Bereich noch nicht vulkanisiert sein. Eine längere Lagerung der Segmente ist daher zur Vermeidung einer Alterung nicht möglich. Dennoch besteht die Gefahr, daß sich die gekrümmten Flächen infolge unterschiedlicher Krümmungen nicht zuverlässig genug aneinander anlegen, was zu einer schlechten Verbindung im Bereich der betreffenden Stellen führen kann. Es wird zwar versucht, diesen Nachteil dadurch zu begegnen, daß bei der abschließenden Vulkanisation des Reifens dieser in einer strumpfförmigen, elastischen Hülle aufgenommen wird. Dies erfordert jedoch einen nicht unbeträchtlichen Aufwand. Ein ganz besonderer Nachteil des bekannten Verfahrens ist jedoch darin zu sehen, daß sich auch hier infolge derVerwendung mehrerer Segmente auch eine dementsprechend große Anzahl von Stoßstellen zwischen aufeinanderfolgenden Segmenten ergibt. Diese Stoßstellen werden zwar mit Bindegummi abgedichtet, stellen aber dennoch Schwachstellen dar, die hier insbesondere infolge ihrer Häufigkeit die Belastbarkeit des runderneuerten Reifens insgesamt begrenzen. Außerdem erfordert jede Stoßstelle eine spezielle Bearbeitung, sodaß sich infolge der größeren Anzahl von Stoßstellen auch bei diesem Verfahren ein nicht unerheblicher Bearbeitungsaufwand ergibt.

Ausgehend von eingangs diskutiertem Stand der Technik ist es die Aufgabe der vorliegenden Erfindung, ein Verfahren eingangs erwähnter Art mit einfachen und kostengünstigen Mitteln so zu verbessern, daß der bisher erforderliche Aufwand weitgehend entfällt und dennoch ein qualitativ höherwertiges Verfahrensprodukt erreicht wird.

Diese Aufgabe wird erfindungsgemäß dadurch gelöst, daß der Laufbelag in Form eines einteiligen, ausvulkanisierten Laufstreifens mit ungekrümmtem Querschnitt und an den Umfang der Karkasse angepaßter Länge hergestellt wird, wobei aufeinanderfolgende Laufstreifenstücke, die nacheinander gepreßt werden, direkt aneinander angepreßt und anvulkanisiert werden, daß auf die gerauhte Karkasse des Reifens aus Rohgummi bestehende Schulteraufbauten aufgebracht werden, welche die quer zur Umfangsrichtung verlaufende, laufflächenseitige Krümmung der Karkasse zumindest weitgehend abbauen, und daß anschließend der Laufstreifen unter Zwischenschaltung der wenigstens einen Haftgummischicht auf die mit den Schulteraufbauten versehene Karkasse aufgewickelt und an der sich ergebenden einen Stoßstelle durch Haftgummi geschlossen wird, bevor der gesamte Reifen im Autoklaven der Vulkanisationsbehandlung unterzogen wird.

Mit diesen Maßnahmen lassen sich die eingangs geschilderten Nachteile vollständig beseitigen. Das erfindungsgemäße Verfahren ergibt in vorteilhafter Weise erstmals runderneuerte Großreifn, wie sie eispielsweise für Erdbewegungsmaschinen Verwendung finden, mit lediglich einer Stoßstelle am Umfang, womit nicht nur die bisher zu befürchtende Häufigkeit von Schwachstellen vom Umfang entfällt, sondern auch der hiermit verbundene Bearbeitunsaufwand. Infolge des erfindungsgemäß vorgesehenen Schulteraufbaus auf der Karkasse gelingt es in vorteilhafter Weise auch mit quer zur Umfangsrichtung ungekrümmten Laufstreifen eine satte Anlage der Laufstreifeninnenfläche an der aufgebauten Karkassenumfangsfläche zu gewährleisten. Gleichzeitig ergibt diese Maßnahmeaber auch eine bisher nicht mögliche Vielseitigkeit, da es hier auf die quer zur Umfangsrichtung verlaufende Karkassenkrümmung nicht mehr ankommt. Da der Laufstreifen bereits bei der Herstellung ausvulkanisiert wird, ist in vorteilhafter Weise auch eine praktisch unbegrenzte Lagerfähigkeit gegeben, was eine wirtschaftliche Vorratsfertigung ermöglicht. Die einteilige Ausführung des Laufstreifens in Verbindung mit der infolge des Schulteraufbaus ermöglichten, satten Anlage ohne nennenswerte innere Spannungen stellt in vorteilhafter Weise auch sicher, daß zur endgültigen Vulkanisation auf die bisher benötigte, strumpfförmige Spannhülle verzichtet werden kann, was den erforderlichen Aufwand weiter senkt. Die erfindungsgemäßen Maßnahmen ergeben dementsprechend ingesamt eine ausgezeichnete Wirtschaftlichkeit.

Vorteilhafte Ausgestaltungen und zweckmäßige Fortbildungen der übergeordneten Maßnahmen sind in den Unteransprüchen angegeben. So kann der über den ganzen Umfang der Karkasse reichende Laufstreifen zweckmäßig abschnittsweise hergestellt werden, wobei die auf den ersten Abschnitt folgenden Abschnitte an den jeweils vorhergehenden Abschnitt angepreßt und direkt anvulkanisiert werden. Diese Maßnahmen stellen sicher, daß trotz Verwendung eines einteiligen Laufstreifens dieser auf einer kompakten Einrichtung herstellbar ist, die nicht größer zu sein braucht, als die bisher benötigte Einrichtung.

Eine weitere vorteilhafte Maßnahme kann darin bestehen, daß beim Füllen der Form zwischen Rohgummi und beheiztem Formoberteil ein Trennblech eingelegt wird. Dieses unterstützt den Fließvorgang und verhindert einen zu schnellen Vulkanisationsbeginn an der Oberfläche. Es ist daher in vorteilhafter Weise möglich, nach wenigstens einem ersten Preßvorgang zur Verteilung des Gummimaterials in die Unterseite des Laufstreifens eine Gewebebahn einzupressen, die vor dem Aufbringen des Laufstreifens auf die Karkasse wieder entfernt wird. Dabei ergibt sich in vorteilhafter Weise die gewünschte rauhe Oberfläche der Laufstreifeninnenseite. Gleichzeitig gewährleistet die Gewebebahn eine optimale Qualitätskontrolle nach erfolgter Vulkanisation, da das Gummimaterial die Gewebebahn durchsetzt. Zudem verbessert die eingepreßte Gewebebahn die Lagerfähigkeit.

In weiterer Ausgestaltung der übergeordneten Maßnahmen können die Schulteraufbauten in Form mehrlagiger Wicklungen eines Rohgummistreifens hergestellt werden. Dies ermöglicht eine individuelle Anpassung an die Verhältnisse des Einzelfalls.

Eine weitere zweckmäßige Maßnahme kann darin bestehen, daß der Reifen während der abschließenden Vulkanisation nur von im Schulterbereich angelegten Spanngurten umfaßt ist. Diese gewährleisten eine zuverlässige Verbindung im Schulterbereich.

Weitere zweckmäßige Ausgestaltungen und vorteilhafte Weiterbildungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:
- Figur 1: eine Belegungseinrichtung in schematischer Darstellung,
- Figur 2: eine Einrichtung zur Laufstreifenherstellung in schematischer Darstellung,
- Figur 3: ein Beispiel für das Ausgangsmaterial,
- Figur 4: einen Querschnitt durch den Laufstreifen,
- Figur 5: eine vorbereitete Karkasse, teilweise im Schnitt und
- Figur 6: einen Schnitt durch einen Autoklaven mit eingehängtem Reifen in schematischer Darstellung.

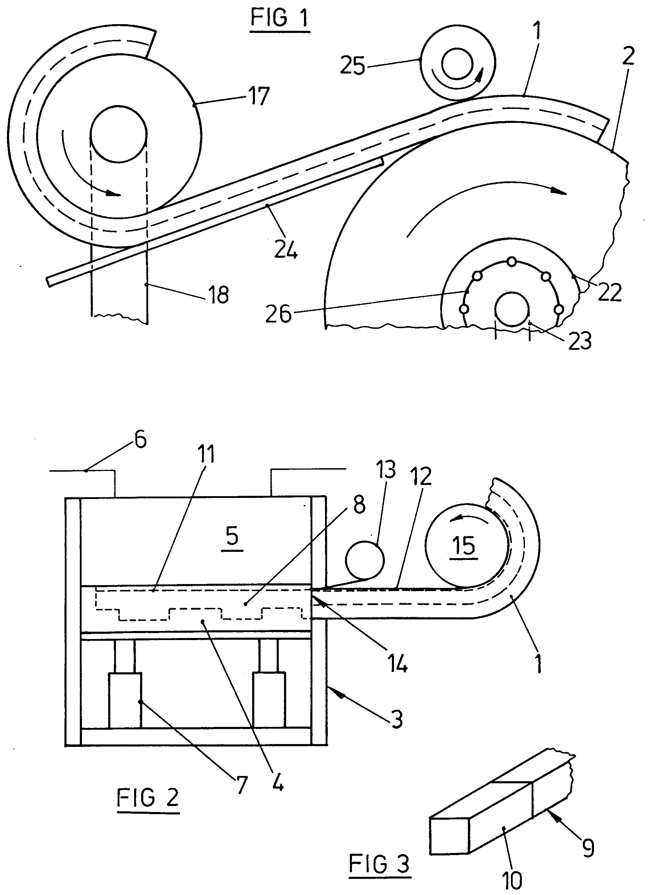

Großreifen, z.B. von Erdbewegungsmaschinen, unterliegen vielfach einem starken oberflächenseitigen Abrieb. Eine Wiederaufbereitung durch Runderneuerung stellt daher ein dringendes Bedürfnis dar. Hierzu findet, wie aus Figur 1 erkennbar ist, ein über den ganzen Reifenumfang reichender Laufstreifen 1 Verwendung, der auf eine vorbereitete Karkasse 2 aufgelegt wird. Der Laufstreifen 1 wird, wie in Figur 2 angedeutet ist, in einer Presse 3 Stück für Stück hergestellt. Hierzu findet eine zweiteilige Form mit Unterteil 4 und Oberteil 5 Verwendung, die in der Presse 3 aufgenommen ist. Das Oberteil 5 ist dabei stationär angeordnet und mit einer Heizeinrichtung versehen, wie durch Anschlüsse 6 angedeutet ist. Das Unterteil 4 ist auf einem mittels einer Hubeinrichtung 7 heb- und senkbaren Tisch aufgenommen. Die dem Formhohlraum zugewandte Seite des Unterteils 4 enthält eine dem Negativ der gewünschten Laufflächenprofilierung entsprechende Profilierung. Diese kann durch in einen aus Stahl bestehenden Tragrahmen eingesetzte Profilkörper aus Alu-Guß gebildet werden. Der Formhohlraum 8 ist im Bereich einer Stirnseite offen, was die Herstellung des Laufstreifens 1 in der Länge der Form entsprechenden Abschnitten ermöglicht.

Der Formhohlraum 8 wird zunächst mit Rohgummi gefüllt. Die eingegebene Masse ist dabei etwas größer als es dem Fassungsvermögen des Formhohlraums 8 entspricht, was eine zuverlässige Füllung gewährleistet. Als Ausgangsmaterial können handelsübliche Fütterstreifen Verwendung finden. Zweckmäßig werden diese aber vorher mittels einer Extrudereinrichtung durchgewalkt und in Form eines der Figur 3 zugrundeliegenden Profils 9 extrudiert. Von diesem hier rechteckförmigen Profil werden Stücke 10 mit der Formbreite entsprechender Länge abgeschnitten. Diese Stücke werden quer zur Längsrichtung der Form in den Formhohlraum 8 eingelegt. Die Verwendung eines durch Extrusion gut durchgewalkten Materials ergibt eine ausgezeichnete Materialhomogenität und ein gutes Fließvermögen. Durch Einlegen kurzer Stücke quer zur Längsrichtung der Form wird die gute Verteilung des Materials im Formhohlraum unterstützt und der Bildung von Lufteinschlüssen vorgebeugt. Das extrudierte Material in Form der kurzen Stücke 10 kann bis zur Eingabe in die Form in einem Wärmeofen bei 80°C gehalten bzw. auf diese Temperatur vorgewärmt werden.

Nachdem eine ausreichende Anzahl von Stücken 10 in den geöffneten Formhohlraum 8 eingelegt ist, wird auf diese ein in Figur 2 angedeutetes Trennblech 11 aufgelegt, das sich dementsprechend zwischen Rohgummi und Formoberteil befindet. Dieses Trennblech soll einen zu schnellen Vulkanisationsbeginn an der der beheizten Oberfläche zugewandten Seite des Formhohlraums verhindern. Danach wird die Form ein- oder mehrmals geschlossen und gepreßt. Sofern dabei zuviel Material entweichen sollte, kann bei einer der Zwischenöffnungen neues Material nachgelegt werden. Mit diesem ersten Preßvorgang wird eine zuverlässige Materialverteilung und Füllung des Formhohlraums herbeigeführt. Danach wird die Form nochmals geöffnet und auf die Oberseite des gepreßten Gummimaterials ein entsprechendes Stück einer Gewebebahn 12 aufgelegt, die von einem Ballen 13 abgewickelt werden kann, wie in Figur 2 angedeutet ist. Danach wird die Form wieder geschlossen und ein weiterer Preßvorgang durchgeführt. Die Preßzeit, die Temperatur und der Druck werden dabei so eingestellt, daß eine vollständige Vulkanisation des den Formhohlraum 8 ausfüllenden Gummimaterials erfolgt.

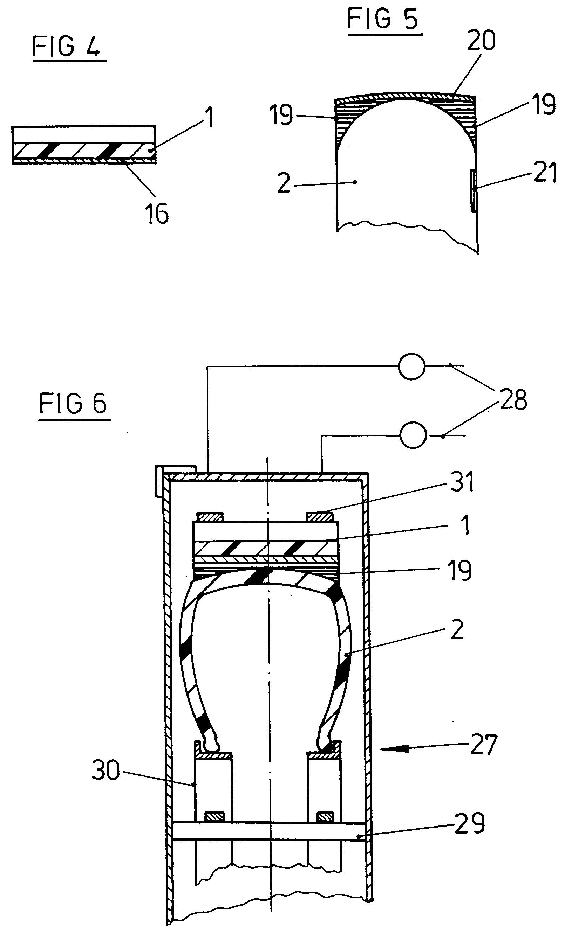

Nach Erreichen dieses Zustands, d.h. einer vollständigen Vulkanisation, wird die Form geöffnet und der vulkanisierte Laufstreifenabschnitt entnommen. Danach wird dessen hinteres Ende angeschliffen und so in die stirnseitige Öffnung 14 der Form eingelegt, daß diese hierdurch verschlossen wird. Danach wird ein weiterer Laufstreifenabschnitt hergestellt, der dabei direkt an den vorhergehenden Laufstreifenabschnitt angepreßt und anvulkanisiert wird. Dieser Vorgang wird so oft wiederholt, bis die gewünschte Länge des Laufstreifens 1 erreicht ist. Diese ist bei den hier in Frage stehenden Großreifen 5-15cm kürzer als der größte Umfang der Karkasse 2, was eine erwünschte Vorspannung des Laufstreifens 1 beim Auflegen auf die Karkasse 1 ermöglicht und ein Stauchen verhindert. Der Querschnitt des Laufstreifens 1 ist, wie am besten aus Figur 4 erkennbar ist, quer zur Längsrichtung ungekrümmt. Der Laufstreifen 1 besitzt also einen ebenen Querschnitt. Es ist daher auch ohne weiteres möglich, den aus der Presse 3 abgezogenen Laufstreifen 1 auf eine Haspel 15 aufzuwickeln, wie in Figur 2 angedeutet ist. Die Aufwicklung erfolgt dabei mit der Profilseite nach außen. In diesem Zustand ist eine Lagerung über einen längeren Zeitraum hinweg möglich. Zum Belegen einer Karkasse 2 wird der betreffende Laufstreifen 1 zunächst ausgelegt. Dann wird die über die ganze Länge durchgehende Gewebebahn 12 abgezogen, wobei eine der vom Gummimaterial durchdrungenen Gewebestruktur entsprechende, rauhe Oberfläche zurückbleibt. Dadurch, daß das Gummimaterial die Gewebebahn 12 durchdringt, ist auch bei der Herstellung des Laufstreifens 1 bereits eine gute Sichtkontrolle möglich. Auf die rauhe Laufstreifenoberfläche wird eine Haftlösung aufgestrichen und dann, wie Figur 4 zeigt, eine dünne Lage 16 von etwa 1mm Stärke aus Haftgummi in Form von Binde- oder vorzugsweise Polstergummi aufgelegt. Anschließend wird der Laufstreifen 1 nunmehr mit der Profilseite nach innen auf eine Haspel 17 aufgewickelt, die in eine zugeordnete Aufnahmeeinrichtung 18 der Belegungseinrichtung einhängbar ist, wie Figur 1 weiter erkennen läßt.

Die Karkasse 2 wird zunächst, nachdem der alte Belag entfernt worden ist, an der Oberfläche aufgerauht. Anschließend wird die Karkasse 2, wie Figur 5 zeigt, in den seitlichen Schulterbereichen so aufgebaut, daß die dortige Krümmung quer zur Umfangsrichtung ganz oder zumindest weitgehend ausgeglichen wird. Die hierzu auf die Karkasse 2 aufgebrachten Schulteraufbauten 19 können durch eine mehrlagige Wicklung eines dünnen, schmalen Rohgummistreifens hergestellt werden. Es wäre aber auch denkbar, zur Bildung der Schulteraufbauten 19 geeignete Profile zu extrudieren, wobei sich ein einlagiger Schulteraufbau ergibt. Nach dem Anbringen der Schulteraufbauten 19 wird die so hergestellte ebene oder nahezu ebene Umfangsfläche ebenfalls mit einer Lage 20 von etwa 1mm Stärke aus Haftgummi belegt. Sofern die Seitenflanken der Karkasse 2 Beschädigungen aufweisen, können diese ebenfalls mit Haftgummi geflickt werden, wie in Figur 5 bei 21 angedeutet ist. Selbstverständlich wäre es auch denkbar, ganz umlaufende Seitenauflagen aufzubringen und diese gegebenenfalls mittels eines Schleifvorgangs zu konturieren. In jedem Falle findet für die Haftgummilagen 16 bzw. 20 sowie die Schulteraufbauten 19 und die Seitenauflagen 21 Material Verwendung, das für eine Vulkanisation bei etwa 120°C geeignet ist.

Die so vorbereitete Karkasse wird nun ebenfalls in die Belegeinrichtung eingehängt. Hierzu ist die Karkasse 2 mit ihrem Innenumfang auf einem zugeordneten Tragring 22 aufgenommen, der in eine zugeordnete Aufnahmeeinrichtung 23 der Belegeinrichtung aufnehmbar ist. Die den Laufstreifen 1 enthaltende Haspel 17 ist dabei auf die Laufflächenmitte der Karkasse 2 einstellbar, so daß sich eine exakt mittige Lage des aufgebrachten Laufstreifens 1 ergibt. Der von der Haspel 17 ablaufende Laufstreifen 1 wird mittels einer Führungsrutsche 24 tangential an die Karkasse 2 herangeführt. Die Führungsrutsche 24 kann einstellbar an der Aufnahmeeinrichtung 18 aufgenommen sein. Am Auslauf des so herangeführten Laufstreifens 1 auf die Karkasse 2 ist eine Anpreßwalze 25 vorgesehen, mittels der der im Querschnitt ebene Laufstreifen 1 an die ebene oder nur ganz leicht gekrümmte Lauffläche der karkasse 2 angedrückt wird. Eine leichte Krümmung der Lauffläche der Karkasse 2 kann vorteilhaft sein, um im Betrieb günstige Belastungsverhältnisse zu erreichen. Zur Bewerkstelligung dieser leichten Krümmung kann das im Bereich der Außenflanken der Schulteraufbauten 19 vorgesehene Umfangsmaß etwas kleiner, bei den hier in Frage stehenden EM-Reifen etwa 10-20cm kleiner als das Umfangsmaß der Laufflächenmitte sein. Die Anpreßwalze 15 kann entsprechend dieser Krümmung konfiguriert sein, so daß sich eine satte Anlage des Laufstreifens 1 ergibt.

Die die Karkasse 2 aufnehmende Stützeinrichtung 22 ist in Pfeilrichtung antreibbar. Ebenso kann die Andrückwalze 25 antreibbar sein. Dasselbe gilt für die Haspel 17. In jedem Falle sind die Antriebe aber unabhängig voneinander, so daß auf den Laufstreifen 1, der, wie oben schon erwähnt, etwas kürzer als die Umfangslänge der Karkasse 2 ist, ein Zug ausgeübt werden kann. Dieser wird so eingestellt, daß jeder Stollen des Profils des Laufstreifens 1 an der gewünschten Stelle des Umfangs der Karkasse 2 zu liegen kommt. Hierzu ist eine im Bereich der Karkassenaufnahme vorgesehene Teilungseinrichtung 26 vorgesehen, die eine exakte Zuordnung jedes Umfangsbereichs der Karkasse 2 zum gewünschten Bereich des Laufstreifens 1, dessen Teilung durch das Profil vorgegeben ist, zuläßt. Nach Beendigung der Belegung wird die dabei sich ergebende, eine Stoßstelle zwischen dem Anfang und dem Ende des Laufstreifens 1 mit Haftgummi geschlossen. Um dies zu erleichtern, können der Anfang und das Ende des Laufstreifens 1 vor Beginn der Belegungsarbeiten angeschliffen werden. Es wäre auch denkbar, die Seitenauflagen 21 erst nach dem Auflegen des Laufstreifens 1 anzubringen. Der mit dem Laufstreifen 1 und eventuellen Seitenauflagen etc. versehene Reifen wird nun zur endgültigen Vulkanisation in einen Autoklaven 27 eingebracht, wie in Figur 6 angedeutet ist. Hierbei handelt es sich um eine mit Dampf auf eine Temperatur von etc. 120°C beheizbare und mit einem Druck von 4-5bar beaufschlagbare, verschließbare Kammer. Der Dampf bzw. das Kondensat werden über Leitungen 28 zu- bzw. abgeführt. Im Innenraum des Autoklaven 27 ist ein Tragbügel 29 vorgesehen, auf dem der eingebrachte Reifen aufgehängt werden kann. Hierzu ist die Karkasse 2 mit ihrem Innenumfang auf Stützringen 30 aufgenommen, die auf dem Tragbügel 29 aufgelegt werden können. Die Stützringe 30 können hierzu mit sie durchsetzenden Sprossen versehen sein. Die Stützringe 30 halten nicht nur den noch nicht vulkanisierten Reifen in Form, sondern schützen auch die im Bereich des Innenumfangs vorgesehenen Wulste. Die Stützringe 30 können ohne weiteres auch so ausgebildet sein, daß sie auch bei Vorarbeiten, beispielsweise beim Belegen in der Belegeeinrichtung bzw. beim Herrichten der Karkasse, bereits zum Einsatz kommen können.

Im Autoklaven 27 erfolgt die endgültige Vulkanisation, wobei die bisher nicht ausvulkanisierte Gummimasse in Form der Schulteraufbauten 19, der Haftgummischichten 16,. 20 und ggf. der Seitenauflagen 21 vollständig ausvulkanisieren und damit eine feste Verbindung des Laufstreifens 1 mit der Karkasse 2 bewerkstellligen. Die Temperatur und der Druck betragen dabei, wie schon erwähnt, etwa 120°C bzw. 4-5bar. Die Behandlungszeit richtet sich nach der Art des Reifens und beträgt bei kleineren EM-Reifen etwa vier Stunden und bei den größten EM-Reifen etwa acht Stunden. Der Laufstreifen 1 kann während der Vulkanisationsbehandlung im Autoklaven 27, wie Figur 6 weiter erkennen läßt, in den äußeren Schulterbereichen von umlaufenden Spanngurten 31 umfaßt sein, die eine saubere Anlage im Schulterbereich gewährleisten. Bei den Spanngurten 31 kann es sich um einfache, mit Schnallen versehene Riemen oder Seile handeln, die leicht angelegt und abgenommen werden können und immer wieder verwendbar sind, so daß sich im Gegensatz zu elastischen Gummistrümpfen etc. praktisch kein Bereitstellungsaufwand ergibt.

Da beim erfindungsgemäßen Verfahren im Hinblick auf die Schulteraufbauten ohnehin bei 120°C vulkanisiert wird, kann als Haftgummi zweckmäßig Polstergummi Verwendung finden, der im Gegensatz zu Bindegummi billiger ist,aber eine Temperaturbehandlung von 120°C verlangt. Die Verwendung von Bindegummi, der bereits darunter vulkanisiert, ist nicht erforderlich, wodurch sich nicht nur der Gestehungsaufwand sondern auch der Verarbeitungsaufwand erniedrigen.

## Patentansprüche

1. Verfahren zum Runderneuern von Großreifen wie EM-Reifen, bei dem auf die vorbereitete Karkasse (2) eines Reifens unter Zwischenschaltung wenigstens einer Haftgummischicht (16,20) ein neuer, in einer beheizbaren Form abschnittsweise gepreßter Laufbelag aufgelegt und dann der gesamte Reifen in einem Autoklaven (27) einer Vulkanisationsbehandlung unterzogen wird, **dadurch gekennzeichnet, daß** der Laufbelag in Form eines einteiligen, ausvulkanisierten Laufstreifens (1) mit ungekrümmtem Querschnitt und an den Umfang der Karkasse(2) angepaßter Länge hergestellt wird, wobei aufeinanderfolgende Laufstreifenstücke, die nacheinander gepreßt werden, direkt aneinander angepreßt und anvulkanisiert werden, daß auf die gerauhte Karkasse (2) des Reifens aus Rohgummi bestehende Schulteraufbauten (19) aufgebracht werden, welche die quer zur Umfangsrichtung verlaufende, laufflächenseitige Krümmung der Karkasse (2) zumindest weitgehend abbauen, und daß anschließend der Laufstreifen (1) unter Zwischenschaltung der wenigstens einen Haftgummischicht (16,20) auf die mit den Schulteraufbauten (19) versehene Karkasse (2) aufgewickelt und an der sich ergebenden einen Stoßstelle durch Haftgummi geschlossen wird, bevor der gesamte Reifen im Autoklaven (27) der Vulkanisationsbehandlung unterzogen wird.

2. Verfahren nach Anspruch 1, **dadurch gekennzeichnet, daß** das jeweils hintere Ende eines Laufstreifenstückes das beim Pressen des jeweils nächsten Laufstreifenstückes, in die Form (4,5) hineinragt, vor dem nächsten Preßvorgang angeschliffen wird.

3. Verfahren nach einem der vorhergehenden Ansprüche, **dadurch gekennzeichnet, daß** die Form (4,5) mit vorzugsweise quer zur Formlänge eingelegten Abschnitten (10) eines extrudierten Rohgummiprofils (9), vorzugsweise mit Masseüberschuß, gefüllt wird und daß vorzugsweise das in die Form (4,5) eingelegte Material in einem Wärmeofen bei 80°C vorbehandelt wird.

4. Verfahren nach einem der vorhergehenden Ansprüche, **dadurch gekennzeichnet, daß** zwischen Rohgummi und beheizbarem Formoberteil (5) ein Trennblech (11) eingelegt wird.

5. Verfahren nach einem der vorhergehenden Ansprüche, **dadurch gekennzeichnet, daß** in die Unterseite des Laufstreifens (1), der vorzugsweise in aufgerolltem Zustand gelagert wird, eine über die ganze Laufstreifenlänge durchgehende Gewebebahn (12) eingepreßt wird, die vor dem Aufbringen des Laufstreifens (1) auf die Karkasse (2) entfernt wird, wobei vorzugsweise nach wenigstens einem ersten Preßvorgang die Form (4, 5) geöffnet und die Gewebebahn (12) eingelegt wird und darauf zumindest ein weiterer Preßvorgang folgt.

6. Verfahren nach einem der vorhergehenden Ansprüche, **dadurch gekennzeichnet, daß** Druck, Temperatur und Behandlungszeit des Preßvorgangs so gewählt werden, daß eine vollständige Vulkanisation des Laufstreifens (1) erfolgt, der kürzer, vorzugsweise 5-15cm kürzer, als der gerauhte Karkassenumfang hergestellt und vorzugsweise in aufgerolltem Zustand gelagert wird.

7. Verfahren nach einem der vorhergehenden Ansprüche, **dadurch gekennzeichnet, daß** die Schulteraufbauten (19) in Form einer mehrlagigen Wicklung eines Rohgummistreifens hergestellt werden, wobei vorzugsweise im Schulterbereich ein kleineres, vorzugsweise 10-20cm kleineres Umfangsmaß, als in der Laufflächenmitte vorgesehen wird.

8. Verfahren nach einem der vorhergehenden Ansprüche, **dadurch gekennzeichnet, daß** die Umfangsfläche der mit den Schulteraufbauten (19) versehenen Karkasse (2) und vorzugsweise auch die Innenfläche des Laufstreifens (1) ggf. nach Entfernung der Gewebebahn (12) vorzugsweise nach Einstreichen mit einer Haftlösung mit jeweils einer vorzugsweise 1mm starken Schicht (16) aus Haftgummi belegt werden.

9. Verfahren nach einem der vorhergehenden Ansprüche, **dadurch gekennzeichnet, daß** der zur Belegung der Karkasse (2) vorbereitete Laufstreifen (1) mit seiner Profilseite nach innen aufgewickelt und beim Belegen der Karkasse (2) auf diese abgewickelt wird, wobei der Profilstreifen (1) vorzugsweise mittels einer Anpreßrolle (25) an die vorbereitete Karkasse (2) angepreßt wird.

10. Verfahren nach einem der vorhergehenden Ansprüche, **dadurch gekennzeichnet, daß** zumindest die die Karkasse (2) aufnehmende Einrichtung und die Anpreßrolle (25) unabhängig voneinander angetrieben werden und daß diese Antriebe so aufeinander abgestimmt werden, daß die der Karkasse (2) zugeordnete Teilung einer Teilungseinrichtung (26) mit der durch das Profil des Laufstreifens (1) vorgegebenen Teilung des Laufstreifens (1) übereinstimmen.

11. Verfahren nach einem der vorhergehenden Ansprüche, **dadurch gekennzeichnet, daß** der Reifen zumindest im autoklaven (27) mit seinem Innenumfang auf Stützringen (30) aufgenommen wird und vorzugsweise während der abschließenden Vulkanisationsbehandlung im Autoklaven (27) nur von im Schulterbereich angelegten Spanngurten (31) umfaßt ist.

12. Verfahren nach einem der vorhergehenden Ansprüche, **dadurch gekennzeichnet, daß** bei beschädigter Seitenflanke der Karkasse (2) diese vor der Vulkanisationsbehandlung im Autoklaven (27) mit einer aus Rohgummi bestehenden Seitenauflage (21) belegt wird.

13. Verfahren nach einem der vorhergehenden Ansprüche, **dadurch gekennzeichnet, daß** zur Bildung der Schulteraufbauten (19), der Bindegummilagen (16, 20) und ggf. der Seitenauflagen (21) für Vulkanisation bei 120°C geeignetes Material verwendet wird, wobei als Haftgummi vorzugsweise Polstergummi Verwendung findet, der nicht unter 120°C vulkanisiert, und daß der Autoklav (27) über eine Vulkanisationszeit von 4-8 Stunden mit einer Temperatur von 120°C beheizt und mit einem Druck von 4-5bar beaufschlagt wird.

## Claims

1. Method of retreading large tyres such as EM tyres in which a new tread covering, pressed section by section in a heatable mould, is placed on the prepared carcass (2) of a tyre with one or more adhesive rubber layers (16, 20) interposed, after which the whole tyre is subjected to vulcanization treatment in an autoclave (27), characterized in that the tread covering is produced in the form of a one-piece, fully-vulcanized tread strip (1) with uncurved cross-section and length matched to the perimeter of the carcass (2), with successive tread strip sections which are pressed one after the other being pressed and vulcanized directly to one another, that built-up shoulders (19) of unvulcanized rubber are applied to the roughened carcass (2) of the tyre and at least largely reduce the tread-side curvature of the carcass running at right-angles to the circumference, and that the tread strips (1) are then wound on to the carcass (2) provided with the built-up shoulders (19), with one or more adhesive rubber layers (16, 20) interposed, and the resulting single joint is sealed by adhesive rubber before the complete tyre is subjected to vulcanization treatment in the autoclave (27).

2. Method according to claim 1, characterized in that each rear end of a tread strip section which extends into the mould (4, 5) during pressing of the next tread strip section, is ground before the next pressing operation.

3. Method according to any of the preceding claims, characterized in that the mould (4, 5) is filled with sections (10) of an extruded unvulcanized rubber profile (9) inserted preferably at right-angles to the long side of the mould, preferably with surplus material, and that preferably the material placed in the mould (4, 5) is pretreated in a heating furnace at 80°C.

4. Method according to any of the preceding claims, characterized in that a separating sheet (11) is inserted between the unvulcanized rubber and the heatable mould top section (5).

5. Method according to any of the preceding claims, characterized in that, into the underside of the tread strip (1), which is preferably mounted in rolled-up form, is pressed a fabric strip continuous over the entire length of the tread strip, and which is removed before the tread strip (1) is applied to the carcass (2), wherein preferably after at least an initial pressing operation the mould (4, 5) is opened and the fabric strip (12) inserted, this being followed by at least one further pressing operation.

6. Method according to any of the preceding claims, characterized in that pressure, temperature and treatment time of the pressing process are so selected that complete vulcanization of the tread strip (1) is effected, the latter being made shorter, preferably 5-15 cm shorter, than the roughened carcass perimeter, and being preferably stored in rolled-up form.

7. Method according to any of the preceding claims, characterized in that the built-up shoulders (19) are produced in the form of a multi-layer winding of an unvulcanized rubber strip, with preferably a smaller, preferably 10-20 cm smaller peripheral dimension provided in the shoulder area than in the tread centre.

8. Method according to any of the preceding claims, characterized in that the peripheral face of the carcass (2) provided with the built-up shoulders (19) and preferably also the inner face of the tread strip (1), where applicable after removal of the fabric strip (12), are each coated with a preferably 1 mm thick layer (16) of adhesive rubber after coating with an adhesive solution.

9. Method according to any of the preceding claims, characterized in that the tread strip (1) prepared for covering the carcass (2) is wound with its profile side inwards and for covering the carcass (2) is unwound on to the latter, with the profile strip (1) preferably being pressed on to the prepared carcass (2) by means of a contact pressure roller (25).

10. Method according to any of the preceding claims, characterized in that at least the fixture holding the carcass (2), and the contact pressure roller (25) are driven independently of one another, and that these drive units are so geared to one another that the spacing assigned to the carcass (2) by a spacing device (26) coincides with the spacing of the tread strip predetermined by the tread strip profile.

11. Method according to any of the preceding claims, characterized in that the tyre, at least in the autoclave (27), is mounted by its inner perimeter on support rings (30), and is preferably encompassed only by clamping bands (31) applied only in the shoulder area during the subsequent vulcanization treatment in the autoclave (27).

12. Method according to any of the preceding claims, characterized in that, if the side wall of the carcass (2) is damaged, it is covered with a side layer (21) of unvulcanized rubber before vulcanization treatment in the autoclave (27).

13. Method according to any of the preceding claims, characterized in that, to form the built-up shoulders (19), the adhesive rubber layers (16, 20) and where applicable the side layers (21), material suitable for vulcanization at 120°C is used, with cushion rubber which does not vulcanize below 120°C preferably being used as adhesive rubber, and that the autoclave (27) is heated for a vulcanization period of 4-8 hours at a temperature of 120°C and subjected to a pressure of 4-5 bar.

## Revendications

1. Procédé pour le rechapage de bandages pneumatiques de grandes dimensions, tels que des bandages pneumatiques pour véhicules de terrassement, dans lequel, sur la carcasse prétraitée (2) d'un bandage pneumatique, en intercalant au moins une couche de caoutchouc adhésif (16, 20), on dépose une nouvelle surface de roulement pressée par sections dans un four qui peut être chauffé et on soumet ensuite le bandage pneumatique dans son ensemble dans un autoclave (27) à un traitement de vulcanisation, caractérisé en ce qu'on prépare la surface de roulement sous la forme d'une bande de roulement (1) en une seule pièce complètement vulcanisée à section transversale non courbe et à longueur adaptée à la périphérie de la carcasse (2), dans lequel des morceaux de bandes de roulement successifs, qui sont comprimés l'un après l'autre, sont directement pressés l'un contre l'autre et soumis à une vulcanisation naissante, en ce qu'on applique, sur la carcasse (2) du bandage pneumatique rendue rugueuse, des structures d'épaulements (19) constituées de caoutchouc cru, qui réduisent, au moins dans une large mesure, la courbure de la carcasse (12) côté bande de roulement s'étendant transversalement par rapport à la périphérie, et en ce qu'on enroule ensuite la bande de roulement (1), en intercalant la ou les couches de caoutchouc adhésif (16, 20), sur la carcasse (2) munie des structures d'épaulements (19) et on la ferme avec du caoutchouc adhésif à l'endroit de jointure qui se forme, avant de soumettre l'ensemble du bandage pneumatique dans l'autoclave (27) au traitement de vulcanisation.

2. Procédé selon la revendication 1, caractérisé en ce que l'extrémité arrière respective d'un morceau de bande de roulement qui pénètre dans le moule (4, 5), lorsque le morceau ultérieur respectif de bande de roulement est pressé, est soumise à un prémeulage avant de procéder au pressage ultérieur.

3. Procédé selon l'une quelconque des revendications précédentes, caractérisé en ce que le moule (4, 5) est rempli à l'aide de sections (10) d'un profilé extrudé en caoutchouc cru (9), de préférence avec un excès de matière, introduit de préférence transversalement par rapport à la longueur du moule, et en ce que de préférence, on soumet à un prétraitement dans un four de chauffage à 80°C, la matière introduite dans le moule (4, 5).

4. Procédé selon l'une quelconque des revendications précédentes, caractérisé en ce qu'on insère une tôle de séparation (11) entre le caoutchouc cru et la partie supérieure de moule (5) qui peut être chauffée.

5. Procédé selon l'une quelconque des revendications précédentes, caractérisé en ce que, sur le côté inférieur de la bande de roulement (1) qui est entreposée de préférence à l'état enroulé, on introduit par pressage une bande de tissu (12) s'étendant en continu sur toute la longueur de la bande de roulement, que l'on retire avant d'appliquer la bande de roulement (1) sur la carcasse (2), le moule (4, 5) étant ouvert et la bande de tissu (12) étant introduite de préférence après au moins un premier processus de pressage, au moins un processus de pressage ultérieur faisant immédiatement suite au premier.

6. Procédé selon l'une quelconque des revendications précédentes, caractérisé en ce qu'on sélectionne la pression, la température et le temps de traitement du processus de pressage de telle sorte que l'on obtienne une vulcanisation complète de la bande de roulement (1) que l'on prépare pour qu'elle soit plus courte, de préférence plus courte de 5-15 cm, que la périphérie de carcasse rendue rugueuse et que l'on entrepose de préférence à l'état enroulé.

7. Procédé selon l'une quelconque des revendications précédentes, caractérisé en ce qu'on prépare les structures d'épaulements (19) sous la forme d'un enroulement multicouche d'une bande de caoutchouc cru en prévoyant de préférence, dans la zone des épaulements, une mesure périphérique inférieure, de préférence inférieure de 10-20 cm, à celle existant au milieu de la bande de roulement.

8. Procédé selon l'une quelconque des revendications précédentes, caractérisé en ce que la surface périphérique de la carcasse (2) munie des structures d'épaulements (19) et de préférence également la surface interne de la bande de roulement (1) sont recouvertes, respectivement, d'une couche (16) de caoutchouc dur ayant de préférence une épaisseur de 1 mm, éventuellement après avoir retiré la bande de tissu (12), de préférence après l'enduction avec une solution d'adhésif.

9. Procédé selon l'une quelconque des revendications précédentes, caractérisé en ce que la bande de roulement (1) ayant subi un traitement préalable pour le recouvrement de la carcasse (2) est enroulée avec son côté profilé vers l'intérieur et, lors du recouvrement de la carcasse (2), est déroulée sur cette dernière la bande profilée (1) étant pressée de préférence contre la carcasse prétraitée (2), de préférence à l'aide d'un rouleau presseur (25).

10. Procédé selon l'une quelconque des revendications précédentes, caractérisé en ce qu'au moins le mécanisme sur lequel vient se disposer la carcasse (2) et le rouleau presseur (25) sont entraînés de manière mutuellement indépendante, et en ce que ces entraînements sont synchronisés l'un par rapport à l'autre de telle sorte que le pas d'un mécanisme de séparation (26), attribué à la carcasse (2), et le pas de la bande de roulement (1) prédéfini par le profil de la bande de roulement (1) concordent.

11. Procédé selon l'une quelconque des revendications précédentes, caractérisé en ce que le bandage pneumatique, au moins dans l'autoclave (27), vient se disposer avec sa périphérie interne sur des anneaux de support (30) et, de préférence, au cours du traitement de vulcanisation final dans l'autoclave (27), n'est entouré que par des courroies de tension (31) disposées dans la zone des épaulements.

12. Procédé selon l'une quelconque des revendications précédentes, caractérisé en ce que, en cas de dégradation des flancs latéraux de la carcasse (2), on recouvre ces derniers avant le traitement de vulcanisation dans l'autoclave (27) à l'aide d'un revêtement latéral (21) constitué de caoutchouc cru.

13. Procédé selon l'une quelconque des revendications précédentes, caractérisé en ce que, pour la formation des structures d'épaulements (19), des couches de caoutchouc cru (16, 20) et éventuellement des recouvrements latéraux (21), on utilise une matière appropriée pour la vulcanisation à 120°C, du caoutchouc de rembourrage trouvant de préférence une utilisation comme caoutchouc adhésif, qui ne subit pas une vulcanisation en dessous de 120°C, et en ce que l'autoclave (27) est chauffé avec une température de 120°C pendant un temps de vulcanisation de 4-8 heures et est chargé avec une pression de 4-5 bar.
